# FASCICULE DE BREVET EUROPEEN

(11) **EP 1 215 232 B1**
(45) Date de publication et mention de la délivrance du brevet: **14.07.2004**
(21) Numéro de dépôt: 01127184.8
(22) Date de dépôt: 16.11.2001
(51) Int. Cl.: C08K 5/098, C08L 21/00, B60C 1/00

(54) **Produit à base de caoutchouc, tel qu'un pneumatique, contentant un sel de fer d'acide carboxylique aromatique comme agent antioxydant et son procédé d'obtention**
Gummiprodukt, wie ein Reifen, der ein Eisensalz einer aromatischen Carbonsäure als Antioxydant enthält und dessen Herstellungverfahren
Rubber product, such as a tire, containing a iron salt of an aromatic carboxylic acide as antioxydant, and its production process

(30) Priorité: 12.12.2000 FR 0016273
(43) Date de publication de la demande: 19.06.2002
(73) Titulaire: Société de Technologie MICHELIN, 1763 Granges-Paccot (CH); MICHELIN RECHERCHE ET TECHNIQUE S.A., CH-1763 Granges-Paccot (CH)
(72) Inventeur: Pagano, Salvatore, 63400 Chalmalieres (FR); Dumergue, Lucette, 63360 Saint-Beauzire (FR); Averty, Emmanuelle, 95220 Herblay (FR)
(74) Mandataire: Hiebel, Robert

(56) Documents cités:
- WO-A-00/68309
- FR-A- 2 770 848
- GB-A- 870 007

## Description

La présente invention concerne un produit à base de caoutchouc, son procédé d'obtention et un procédé pour réduire la résistance au roulement d'un pneumatique constitué dudit produit, tel qu'un pneumatique poids-lourd.

Une des préoccupations principales des manufacturiers de pneumatiques est d'augmenter la durée de vie de ceux-ci. En particulier il importe d'améliorer l'endurance, vis-à-vis des processus oxydants, des compositions de caoutchouc, des renforts métalliques ou textiles et des interfaces entre ces mélanges et ces renforts.

Un procédé connu pour réduire ces phénomènes d'oxydation consiste à limiter la quantité d'oxygène qui arrive dans une zone de l'enveloppe particulièrement sensible à l'oxydation, en provenance de l'air de gonflage ou de l'air extérieur. C'est ainsi que l'on utilise depuis très longtemps une gomme intérieure formée d'une couche de caoutchouc butyl, imperméable à l'oxygène, formant la paroi interne des enveloppes. Malheureusement, l'imperméabilité du caoutchouc butyl n'est pas totale et le flux d'oxygène, même réduit, qui passe dans la masse de l'enveloppe produit à la longue les phénomènes d'oxydation que l'on voulait éviter.

D'autres matériaux encore plus étanches que le caoutchouc butyl ont été proposés dans ce but, comme décrit par exemple dans les documents US-A-5 236 030, US-A-4 874 670, US-A-5 036 113, EP-A-337 279, US-A-5 040 583 et US-A-5 156 921. Cependant ces matériaux sont coûteux et leur mise en oeuvre dans les enveloppes pose de multiples problèmes.

Un autre procédé pour éviter les problèmes d'oxydation consiste à piéger chimiquement l'oxygène par thermo-oxydation accélérée d'une composition de caoutchouc servant de tampon, disposée entre une source principale d'oxygène et la zone que l'on veut protéger contre les phénomènes d'oxydation. A titre d'exemple, une telle composition tampon peut être localisée entre ladite gomme intérieure et la nappe carcasse pour diminuer la quantité d'oxygène qui arrive au contact de cette nappe en provenance de l'air de gonflage, en particulier dans les enveloppes destinées à être montées sur des véhicules poids lourds.

Pour accélérer la fixation de l'oxygène, il est connu d'utiliser dans ces compositions tampon un sel métallique qui catalyse l'oxydation, en particulier un sel de cobalt. Ce sel a pour effet d'activer la décomposition homolytique des hydroperoxydes générés lors du vieillissement provoqué par les phénomènes d'oxydation précités. Ce sel est introduit de préférence dans une quantité de 0,2 à 0,3 partie en poids en équivalent cobalt pour 100 parties en poids de l'élastomère dans la composition tampon. On augmente ainsi de 50 à 100 % environ la quantité d'oxygène qui peut être piégée par cette composition tampon, par rapport à la même composition dépourvue de sel de cobalt.

Malheureusement, l'expérience montre que cette amélioration du comportement vis-à-vis de l'oxydation s'accompagne d'une augmentation importante des pertes hystérétiques de la composition tampon par suite de la quantité notable de sel de cobalt introduite. Cette augmentation des pertes hystérétiques conduit d'une part à un auto-échauffement de la composition, d'où une durée de vie diminuée, ce qui est en opposition avec le but recherché, et à une augmentation de la résistance au roulement, ce qui est également à éviter car le but des manufacturiers est de limiter autant que possible la résistance au roulement pour diminuer la consommation de carburant.

Pour ces raisons, l'utilisation de compositions tampons, aussi séduisante soit elle, n'a pas eu le développement que l'on attendait.

Le document de brevet européen EP-A-507 207 décrit une méthode pour piéger de l'oxygène au moyen d'une composition tampon élastomère, laquelle est contenue dans une couche d'un emballage. Cette composition tampon est notamment caractérisée par la présence d'un sel de métal de transition prévu pour activer la fixation d'oxygène. Comme exposé ci-dessus, les sels métalliques qui sont décrits à titre préférentiel sont des sels de cobalt. A titre subsidiaire, d'autres métaux tels que le manganèse, voire le fer sont également envisagés, mais pas en relation avec des sels spécifiés.

Les documents de brevet internationaux WO-A-99/24502 et WO-A-00/68309, au nom de la demanderesse, décrivent des produits à base de caoutchouc, tels que des enveloppes de pneumatique, chacun étant du type comportant au moins une zone tampon prévue pour piéger l'oxygène extérieur au produit en vue de protéger de l'oxydation au moins une zone sensible dudit produit, ladite ou chaque zone tampon contenant une composition à base d'au moins un élastomère qui comprend au moins un sel de fer (III) spécifique prévu pour activer l'oxydation dans ladite composition. Chaque produit est obtenu en incorporant par travail mécanique ledit sel à l'élastomère ou aux élastomères que comprend ladite composition, pour l'obtention de ladite zone tampon.

Dans le document WO-A-99/24502, ledit sel appartient au groupe constitué par l'acétylacétonate de fer (III) et par les sels de fer (III) d'acides carboxyliques répondant à la formule Fe(CₙH₂ₙO₂)₃, où n peut aller de 6 à 23.

Dans le document WO-A-00/68309, ledit sel est un sel de fer (III) d'un acide carboxylique répondant à la formule Fe(CₙH₂ₙO₂)₃, où n peut aller de 2 à 5.

Les produits à base de caoutchouc qui sont décrits dans ces deux documents sont tels que les sels de fer (III) spécifiques qu'ils contiennent permettent le piégeage de l'oxygène à l'intérieur de la zone tampon avec une efficacité permettant de protéger de l'oxydation la ou chaque zone sensible d'une manière accrue par rapport aux zones tampon connues contenant un activateur d'oxydation à base de sel de cobalt, notamment.

Les produits décrits dans ces deux documents permettent par ailleurs une réduction significative des pertes hystérétiques dans la zone tampon, par rapport à ces mêmes zones tampon connues, cela grâce à la sélection de ces sels de fer (III) spécifiques et, dans le cas où ces produits sont constitués d'enveloppes de pneumatique, ces dernières présentent un auto-échauffement réduit lors du roulage et, par conséquent, une durée de vie augmentée par rapport à des enveloppes caractérisées par lesdites zones tampon connues.

La demanderesse a trouvé de façon inattendue que les effets bénéfiques précités obtenus par lesdits sels de fer (III) sont substantiellement conservés en utilisant de nouveaux sels de fer (III) spécifiques, également pour l'obtention d'un produit à base de caoutchouc, du type comportant au moins une zone tampon prévue pour piéger l'oxygène extérieur audit produit en vue de protéger de l'oxydation au moins une zone sensible dudit produit, ladite ou chaque zone tampon contenant une composition à base d'au moins un élastomère qui comprend au moins un sel de fer (III) spécifique selon l'invention pour activer l'oxydation dans ladite composition.

Le produit selon l'invention est tel que ledit sel est un sel de fer (III) d'un acide aromatique mono-carboxylique comportant un ou plusieurs cycles aromatiques substitués ou non, ledit acide répondant à l'une ou l'autre des formules génériques suivantes: 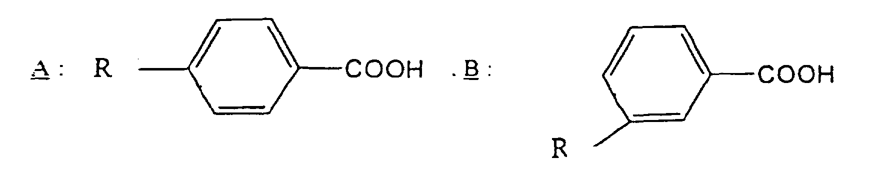 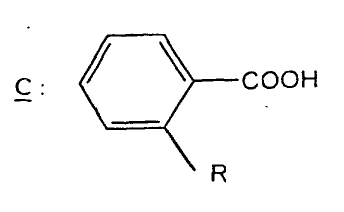 et 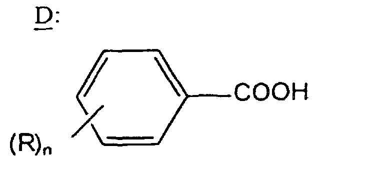 où n est un entier variant de 1 à 5 et :
- dans les formules A, B et C, R est un atome d'hydrogène, un groupe alkyle substitué ou non comportant de 1 à 8 atomes de carbone, un groupe alcoxyle, ou un groupe cyano, et
- dans la formule D, R est un groupe aryle substitué ou non comportant de 6 à 10 atomes de carbone.

Selon un exemple réalisation de l'invention, ledit acide est un acide cyanobenzoïque, tel que l'acide p-cyanobenzoïque.

Selon un autre exemple de réalisation de l'invention, ledit acide est l'acide benzoïque ou un acide alkylbenzoïque, tel que l'acide p-butylbenzoïque.

Selon un autre exemple de réalisation de l'invention, ledit acide est un acide toluique, tel que l'acide p-toluique, m-toluique ou o-toluique.

Selon un autre exemple de réalisation de l'invention, ledit acide est un acide alkoxybenzoïque, tel que l'acide p-methoxybenzoïque.

Selon un autre exemple de réalisation de l'invention, ledit acide est un acide naphtoïque (formule générique D), tel que l'acide 1-naphtoïque ou l'acide 2-naphtoïque.

Dans le cas où ledit acide répond à ladite formule générique A, il s'agit de préférence de l'acide p-cyanobenzoïque, de l'acide benzoïque, d'un acide p-alkylbenzoïque, tel que l'acide p-butylbenzoïque, de l'acide p-toluique, ou d'un acide p-alkoxybenzoïque, tel que l'acide p-methoxybenzoïque.

Dans le cas où ledit acide répond à la formule générique B, il s'agit de préférence de l'acide m-toluique.

Dans le cas où ledit acide répond à la formule générique C, il s'agit de préférence de l'acide o-toluique.

De préférence, la quantité dudit sel de fer (III) selon l'invention dans la composition peut aller de 0,01 à 0,03 pce d'équivalent fer, l'abréviation "pce" signifiant parties en poids pour 100 parties en poids de l'élastomère ou de l'ensemble des élastomères présents dans la composition. A titre encore plus préférentiel; cette quantité du sel de fer (III) selon l'invention varie de 0,01 à 0,02 pce d'équivalent fer.

La composition conforme à l'invention est à base de caoutchouc naturel ou synthétique, ou d'un coupage de deux ou plusieurs de ces caoutchoucs. Des exemples de caoutchoucs synthétiques susceptibles d'être mis en oeuvre dans la composition conforme à l'invention sont les caoutchoucs diéniques tels que le polyisoprène, le polybutadiène, les caoutchoucs mono-oléfiniques tels que le polychloroprène, le polyisobutylène, les copolymères styrène-butadiène ou styrène-butadiène-isoprène, les copolymères acrylonitrile-butadiène-styrène et les terpolymères éthylène-propylènediène. Parmi les caoutchoucs synthétiques, les caoutchoucs diéniques sont préférés, en particulier tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatique ayant de 8 à 20 atomes de carbone.

A titre de diènes conjugués, conviennent notamment le butadiène-1,3, le méthyl-2 butadiène-1,3, les 2,3-di(alcoyle en C1 à C5) butadiène-1,3 tels que par exemple le diméthyl-2,3, diéthyl-2,3 butadiène-1,3, méthyl-2 éthyl-3 butadiène-1,3, le méthyl-2 isopropyl-3 butadiène-1,3, le phényl butadiène-1,3, le pentadiène-1,3, l'hexadiène-2,4.

A titre de composés vinylaromatiques conviennent notamment le styrène, l'ortho, méta, para-méthylstyrène, le mélange commercial "vinyle-toluène", le para-tertiobutyl styrène, les méthoxystyrènes, les chlorostyrènes, le vinylmésitylène, le divinyl benzène, le vinylnaphtalène, etc.

Les copolymères peuvent contenir par exemple entre 99 % et 20 % en poids d'unités diéniques et de 1 % à 80 % en poids d'unités vinyle aromatiques.

Les polymères peuvent avoir toute microstructure qui est fonction des conditions de polymérisation utilisées, notamment de la présence ou non d'un agent modifiant et/ou randomisant et des quantités d'agent modifiant ou randomisant employées. Les polymères peuvent être à blocs, statistiques, séquencés, microséquencés, etc. et préparés en dispersion ou en solution.

A titre préférentiel de caoutchoucs synthétiques diéniques conviennent les polybutadiènes et en particulier ceux ayant une teneur en unités -1,2 comprise entre 4 % et 80 % et ceux ayant plus de 90 % de liaisons cis-1,4, les polyisoprènes, les copolymères de butadiène-styrène et en particulier ceux ayant une teneur en styrène comprise entre 5 % et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 % et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 % et 50 % et plus particulièrement comprise entre 20 % et 40 % en poids, une teneur en unités -1,2 de la partie butadiénique comprise entre 4 % et 85 %, une teneur en unités trans-1,4 de la partie butadiénique comprise entre 6 % et 80 %, une teneur en unités -1,2 plus -3,4 de la partie isoprénique comprise entre 5 % et 70 % et une teneur en unités trans-1,4 de la partie isoprénique comprise entre 10 % et 50 %.

Les caoutchoucs synthétiques peuvent être couplés et/ou étoilés ou encore fonctionnalisés avec un agent de couplage et/ou d'étoilage ou de fonctionnalisation.

Ces caoutchoucs peuvent être vulcanisés et/ou réticulés par tous les agents connus tels que le soufre, les peroxydes, les bismaléimides, etc.

La composition conforme à l'invention comporte les charges et additifs habituels comme par exemple du noir de carbone, de la silice ou toute autre charge blanche renforçante, de l'acide stéarique, des résines renforçantes, de l'oxyde de zinc, des activateurs, des pigments, des accélérateurs ou des retardateurs de vulcanisation, des agents contre le vieillissement tels que des agents anti-oxydants, des agents anti-réversion, des huiles ou divers agents de mise en oeuvre, des résines tackifiantes, des promoteurs d'adhésion sur métal, des cires anti-ozonantes, des agents de liaison et/ou de recouvrement de la silice, etc.

Les compositions conformes à l'invention peuvent être utilisées dans des applications très diverses, et pour de nombreux produits caoutchouteux notamment, par exemple dans les enveloppes de pneumatiques, comme compositions tampons entre une source d'oxygène, notamment l'air de gonflage ou l'air extérieur, et une zone à protéger dans l'enveloppe. A titre d'exemple, ces compositions peuvent être utilisées à l'intérieur de la gomme intérieure, entre la gomme intérieure et la nappe carcasse, entre la nappe carcasse et les nappes sommet, entre les nappes sommet et la bande de roulement, entre la nappe carcasse et le flanc, voire à l'extérieur du flanc.

Une enveloppe de pneumatique selon l'invention, ladite enveloppe étant du type comportant une gomme intérieure, une nappe carcasse s'étendant de tringle à tringle, des nappes sommet, des flancs se terminant par des bourrelets comportant au moins une tringle et une bande de roulement, est caractérisée en ce que ladite ou chaque zone tampon contenant ladite composition occupe au moins l'une des positions suivantes:
radialement à l'intérieur de ladite gomme intérieure, entre ladite gomme intérieure et ladite nappe carcasse, entre ladite nappe carcasse et lesdites nappes sommet, entre lesdites nappes sommet et ladite bande de roulement, entre ladite nappe carcasse et lesdits flancs, dans ou à l'extérieur desdits flancs, dans ou à l'extérieur de ladite bande de roulement.

A titre particulièrement préférentiel, ladite enveloppe de pneumatique est une enveloppe poids-lourd dans laquelle ladite ou chaque zone tampon contenant la composition selon l'invention est située dans une couche élastomère de renfort prévue entre ladite gomme intérieure et ladite nappe carcasse.

Cette couche de renfort a notamment pour effet de protéger la nappe carcasse d'agressions telles que la diffusion de l'oxygène, pour que ladite nappe conserve ses caractéristiques d'origine le plus longtemps possible et, par conséquent, pour augmenter la durée de vie de l'enveloppe poids-lourd et éventuellement le nombre de ses rechapages.

L'utilisation d'un composé de fer conforme à l'invention est très différente des utilisations connues de composés de fer dans l'industrie des caoutchoucs, comme par exemple l'utilisation connue de sels oxydants pour favoriser la mastication des caoutchoucs (propriétés peptisantes) ou la dévulcanisation pour recyclage, ces applications étant par exemple décrites dans les documents US-A-3 324 100, EP-A-157 079 et RU-A-2 014 339.

Concernant le procédé d'obtention d'un produit à base de caoutchouc selon la présente invention, il consiste à incorporer par travail mécanique ledit sel de fer (III) à l'élastomère ou aux élastomères que comprend la composition tampon, pour l'obtention de la zone tampon correspondante.

Selon une autre caractéristique de ce procédé, il consiste à incorporer audit ou auxdits élastomères ledit sel de fer (III) en même temps qu'une charge prévue pour renforcer ladite composition.

Concernant le procédé selon la présente invention pour réduire la résistance au roulement d'une enveloppe de pneumatique, il consiste à incorporer par travail mécanique, à un ou à des élastomères constituant ladite enveloppe, un sel de fer (III) tel que défini ci-dessus.

L'invention sera aisément comprise à l'aide des exemples non limitatifs de réalisation de l'invention qui suivent.

Ces exemples sont soit des exemples conformes à l'invention, soit des exemples non conformes à l'invention utilisant des compositions sans dérivé métallique, ou bien comprenant des sels de cobalt ou encore des sels de fer (III) ne répondant pas à la formule précitée de l'invention.

L'efficacité pro-oxydante des composés de fer ou de cobalt est évaluée en faisant subir aux compositions un vieillissement thermo-oxydant. On mesure ensuite la prise d'oxygène par analyse élémentaire et on détermine l'évolution des propriétés mécaniques comme le module, la perte hystérétique et les propriétés de rupture.

Les tests sont réalisés dans les conditions suivantes.

### Vulcanisation

Sauf indication différente, tous les essais sont réalisés sur des échantillons vulcanisés par cuisson de 20 à 30 minutes à 150°C.

### Vieillissement thermo-oxydant

On utilise une étuve ventilée à la température de 85 °C. Cette température est considérée comme représentative des régimes thermiques lors du fonctionnement d'enveloppes de pneumatiques.

### Perte hystérétique

La mesure de perte hystérétique, ou hystérèse, (Ph) est une perte d'énergie à 60 °C par rebond à énergie imposée mesurée au sixième choc. La valeur, exprimée en %, est la différence entre l'énergie fournie et l'énergie restituée, rapportée à l'énergie fournie. La déformation pour les pertes mesurées est de 40 %.

### Essais de traction

Ces essais permettent de déterminer les contraintes d'élasticité et les propriétés à la rupture des éprouvettes testées. Sauf indication différente, ils sont effectués conformément à la norme AFNOR-NFT-46002 de septembre 1988. On mesure en seconde élongation (c'est-à-dire après un cycle d'accomodation) les modules sécants nominaux (ou contraintes apparentes, en MPa) à 10 % d'allongement (M10) et à 100 % d'allongement (M100). On mesure également les contraintes à la rupture Cr (en MPa) et les allongements à la rupture Ar (en %). Toutes ces mesures de traction sont effectuées dans les conditions normales de température et d'hygrométrie, selon la norme AFNOR- NFT-40101 (décembre 1979).

On a utilisé dans les exemples qui suivent la composition de base suivante (en pce) qui a été réalisée comme connu en soi dans un mélangeur interne puis dans un mélangeur externe, tous les nombres indiqués étant des parties en poids (pce) et étant précisé que le sel de fer (III) est introduit au mélangeur interne, par exemple un Banburry, en même temps que le noir, ZnO, l'acide stéarique et la 6PPD.

| | |
|---|---|
| Caoutchouc naturel | 100 |
| Noir de carbone N326 | 47 |
| Soufre | 4,5 |
| DCBS | 0,8 |
| ZnO | 7,5 |
| Acide stéarique | 0,9 |
| 6PPD | 1,5 |

où :
- DCBS: : N,N-dicyclohexyl-2-benzothiazolesulfénamide
- 6PPD: : N-1,3-diméthylbutyl-N'-phényl-paraphénylènediamine.

A partir de cette composition de base on prépare les compositions suivantes.
- Compositions témoins :
   □ Composition T1 : composition de base sans dérivé métallique.
   □ Composition T2: composition de base comportant en outre 0,25 pce, en équivalent cobalt, d'acétylacétonate de cobalt.
   □ Composition T3 : composition de base comportant en outre 0,02 pce, en équivalent de fer, d'acétylacétonate de fer (III).
- Compositions préférentielles conformes à l'invention :
   □ Composition I1 : composition de base comportant en outre 0,02 pce, en équivalent de fer, de p-cyanobenzoate de fer (III).
   □ Composition I2 : composition de base comportant en outre 0,02 pce, en équivalent de fer, de p-butylbenzoate de fer (III).
   □ Composition I3 : composition de base comportant en outre 0,02 pce, en équivalent de fer, de p-toluiate de fer (III).
   □ Composition I4 : composition de base comportant en outre 0,02 pce, en équivalent de fer, de m-toluiate de fer (III).
   □ Composition I5 : composition de base comportant en outre 0,02 pce, en équivalent de fer, de p-methoxybenzoate de fer (III).
   □ Composition I6 : composition de base comportant en outre 0,02 pce, en équivalent de fer, de 2-naphtoate de fer (III).
   □ Composition I7: composition de base comportant en outre 0,02 pce, en équivalent de fer, de benzoate de fer (III).
   □ Composition I8 : composition de base comportant en outre 0,02 pce, en équivalent de fer, d'o-toluiate de fer (III).
   □ Composition I9 : composition de base comportant en outre 0,02 pce, en équivalent de fer, de 1-naphtoate de fer (III).

Les sels de fer (III) qui sont respectivement inclus dans les compositions II à I9 selon l'invention (sels des acides p-cyanobenzoïque, p-butylbenzoïque, p-toluique, m-toluique, p-methoxybenzoïque, 2-naphtoïque, benzoïque, o-toluique et 1-naphtoïque) ont tous été synthétisés de la manière décrite ci-dessous concernant, à titre d'exemple, la synthèse du sel de l'acide m-toluique (la quantité d'acide variant en fonction de l'acide utilisé).

Dans un Erlenmeyer de 250 ml, 15 g (soit 0,11 mol) d'acide m-toluique sont additionnés à 10 ml d'eau, sous agitation. On ajoute ensuite goutte à goutte, à l'aide d'une ampoule de coulée, une solution de soude préalablement préparée (4,41 g soit 0,11 mol de soude dissous dans 100 ml d'eau). La solution est agitée pendant 20 minutes.

Une solution de FeCl₃ (5,95 g soit 0,037 mol dissous dans 100 ml d'eau) est ajoutée en une seule fois. Un précipité se forme et la suspension obtenue est filtrée et lavée trois fois au moyen de 500 ml d'eau, afin d'éliminer le chlorure de sodium formé.

On récupère ainsi 15,7 g de produit qui, une fois séché à l'étuve sous vide à 50° C, se présente sous forme d'une poudre marron. L'analyse élémentaire confirme bien la formation du sel de fer (III) de l'acide m-toluique.

Concernant la vulcanisation précitée de chaque composition obtenue à 150° C, on notera que la durée de celle-ci est de 20 min. pour ladite composition témoin T2, alors qu'elle est de 30 min. pour les autres compositions.w

a) On a déterminé avec ces compositions les modules d'allongement M10 et M100, ainsi que les pertes hystérétiques. Les résultats sont donnés dans le tableau 1.

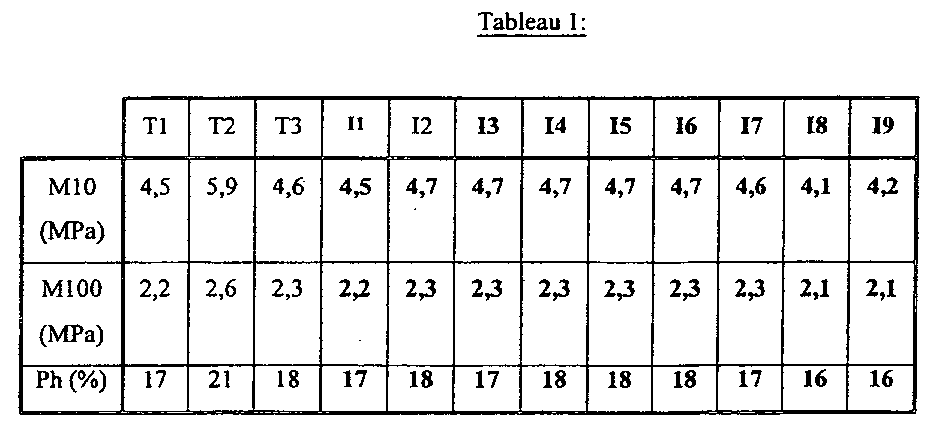

Ce tableau 1 montre que les sels de fer (III) des acides p-cyanobenzoïque, p-butylbenzoïque, p-toluique, m-toluique, p-methoxybenzoïque, 2-naphtoïque, benzoïque, o-toluique et 1-naphtoïque dans les compositions respectives 1 à 19 conformes à l'invention, modifient moins les caractéristiques de la composition de base que ne le fait l'acétylacétonate de cobalt dans la composition témoin T2, et que la perte hystérétique relative à ces compositions I1 à I9 est notablement plus réduite que celle de ladite composition témoin T2.

b) On a cherché à montrer l'aptitude des compositions Il à I9 conformes à l'invention à fixer de l'oxygène, après une durée de thermo-oxydation de 2 semaines à 85°C, en les comparant aux compositions témoins T1, T2 et T3.

Les résultats de ces essais de thermo-oxydation figurent dans le tableau 2 suivant qui donne le % en poids d'oxygène fixé.

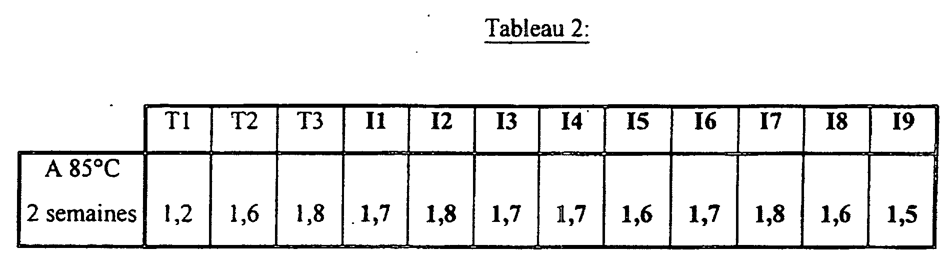

Le tableau 2 montre que les sel de fer (III) d'acides p-cyanobenzoïque, p-butylbenzoïque, p-toluique, m-toluique, p-methoxybenzoïque, 2-naphtoïque, benzoïque, o-toluique et 1-naphtoïque permettent une fixation d'oxygène par les compositions I1 à I9 qui est sensiblement égale ou supérieure à celle obtenue avec la composition témoin T2 comprenant l'acétylacétonate de cobalt, cette fixation étant notablement plus élevée que celle de la composition témoin T1 dépourvue de composé de fer ou de cobalt.

Des compositions de base comportant d'autres sels métalliques décrits comme pro-oxydants dans la littérature, introduits en quantité telle que l'on est à isomole de métal par rapport à la composition témoin T2, tels que les sels de manganèse II ou III et notamment le carbonate, l'acétate, l'acétylacétonate de manganèse (II), l'acétylacétonate de manganèse (III), les sels de molybdène (IV) et notamment le sulfure et l'oxyde de molybdène (IV), les sels de cuivre (II) et notamment l'hydroxyde, le carbonate, le stéarate, l'acétate, l'acétyl acétonate de cuivre (II), les sels de chrome (III) et notamment l'acétylacétonate de chrome, le sulfate de cérium (IV), conduisent à des résultats similaires à ceux obtenus avec la composition témoin T1 dépourvue de sel métallique.

c) On a cherché par ailleurs à déterminer les modules et les propriétés à la rupture, ainsi que l'hystérèse des compositions I1 à I9 conformes à l'invention en comparaison des compositions témoin T1, T2 et T3, cela après voir appliqué à chaque composition le traitement de vieillissement par thermo-oxydation précité (à une température de 85° C pendant 2 semaines).

Les résultats sont donnés dans le tableau 3 suivant qui montre, pour chaque composition, l'évolution des valeurs des différents paramètres par rapport à celles de la même composition avant ce traitement thermo-oxydant.

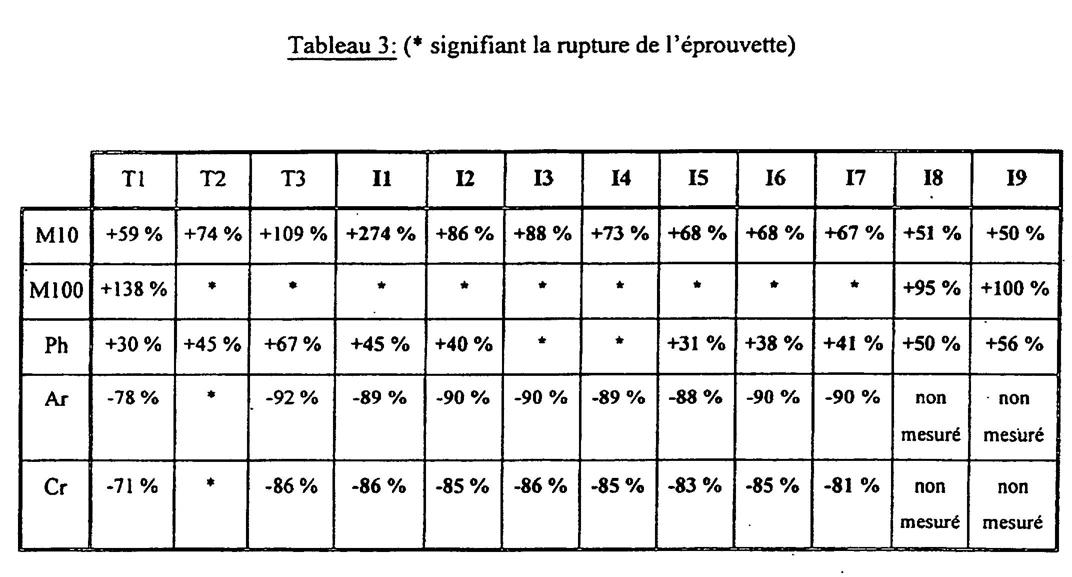

En relation avec les résultats du paragraphe b) ci-dessus, ce tableau 3 montre que les compositions I1 à I9 selon l'invention présentent une aptitude à la fixation d'oxygène qui est améliorée par rapport à ladite composition connue T2 tout en présentant, suite au traitement thermo-oxydant, des propriétés mécaniques d'allongement et de rupture qui ont évolué dans une mesure pratiquement analogue après traitement thermo-oxydant.

## Revendications

1. Produit à base de caoutchouc, du type comportant au moins une zone tampon prévue pour piéger l'oxygène extérieur audit produit en vue de protéger de l'oxydation au moins une zone sensible dudit produit, ladite ou chaque zone tampon contenant une composition à base d'au moins un élastomère qui comprend au moins un sel de fer (III) prévu pour activer l'oxydation dans ladite composition, **caractérisé en ce que** ledit sel est un sel de fer (III) d'un acide aromatique mono-carboxylique, ledit acide comportant un ou plusieurs cycles aromatiques substitués ou non et répondant à l'une ou l'autre des formules génériques suivantes: 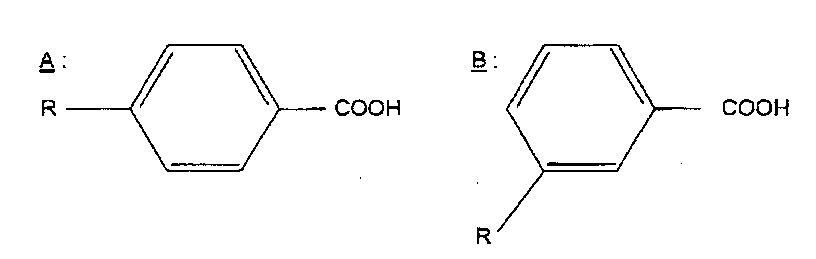 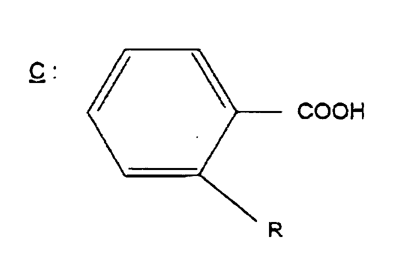 et 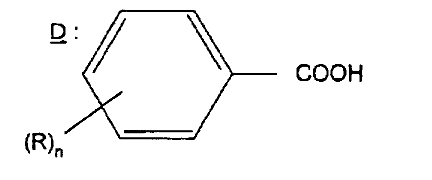 où n est un entier variant de 1 à 5 et :
• dans les formules A, B et C, R est un atome d'hydrogène, un groupe alkyle substitué ou non comportant de 1 à 8 atomes de carbone, un groupe alcoxyle, ou un groupe cyano, et
• dans la formule D, R est un groupe aryle substitué ou non comportant de 6 à 10 atomes de carbone.

2. Produit à base de caoutchouc selon la revendication 1, **caractérisé en ce que** ledit acide est un acide cyanobenzoïque, tel que l'acide p-cyanobenzoïque.

3. Produit à base de caoutchouc selon la revendication 1, **caractérisé en ce que** ledit acide est l'acide benzoïque ou un acide alkylbenzoïque, tel que l'acide p-butylbenzoïque.

4. Produit à base de caoutchouc selon la revendication 1, **caractérisé en ce que** ledit acide est un acide toluique, tel que l'acide p-toluique, m-toluique ou o-toluique.

5. Produit à base de caoutchouc selon la revendication 1, **caractérisé en ce que** ledit acide est un acide alkoxybenzoïque, tel que l'acide p-methoxybenzoïque.

6. Produit à base de caoutchouc selon la revendication 1, **caractérisé en ce que** ledit acide est un acide naphtoïque.

7. Produit à base de caoutchouc selon une des revendications précédentes, **caractérisé en ce que** la quantité dudit sel de fer (III) dans ladite composition est comprise entre 0,01 et 0,03 pce d'équivalent fer.

8. Enveloppe de pneumatique, **caractérisée en ce qu'**elle est constituée d'un produit à base de caoutchouc selon une des revendications précédentes.

9. Enveloppe de pneumatique selon la revendication 8, ladite enveloppe étant du type comportant une gomme intérieure, une nappe carcasse s'étendant de tringle à tringle, des nappes sommet, des flancs se terminant par des bourrelets comportant au moins une tringle et une bande de roulement, **caractérisée en ce que** ladite ou chaque zone tampon contenant ladite composition occupe au moins l'une des positions suivantes:
radialement à l'intérieur de ladite gomme intérieure, entre ladite gomme intérieure et ladite nappe carcasse, entre ladite nappe carcasse et lesdites nappes sommet, entre lesdites nappes sommet et ladite bande de roulement, entre ladite nappe carcasse et lesdits flancs, dans ou à l'extérieur desdits flancs, dans ou à l'extérieur de ladite bande de roulement.

10. Enveloppe de pneumatique poids-lourd selon la revendication 9, **caractérisée en ce que** ladite ou chaque zone tampon contenant ladite composition est située dans une couche élastomère de renfort prévue entre ladite gomme intérieure et ladite nappe carcasse.

11. Procédé d'obtention d'un produit à base de caoutchouc selon une des revendications 1 à 7, **caractérisé en ce qu'**il consiste à incorporer par travail mécanique ledit sel de fer (III) à l'élastomère ou aux élastomères que comprend ladite composition, pour l'obtention de ladite ou de chaque zone tampon.

12. Procédé d'obtention d'un produit à base de caoutchouc selon la revendication 11, ledit produit comportant une charge renforçante, **caractérisé en ce qu'**il consiste à incorporer audit ou auxdits élastomères ledit sel de fer (III) en même temps qu'une charge prévue pour renforcer ladite composition.

13. Procédé pour réduire la résistance au roulement d'une enveloppe de pneumatique, **caractérisé en ce qu'**il consiste à incorporer par travail mécanique, à un ou à des élastomères constituant ladite enveloppe, un sel de fer (III) tel que défini à l'une des revendication 1 à 7.

## Patentansprüche

1. Produkt auf Kautschukbasis von dem Typ, der mindestens eine zum Abfangen von äußerem Sauerstoff vorgesehene Pufferzone aufweist, um mindestens eine empfindliche Zone des Produkts vor Oxidation zu schützen, wobei diese Pufferzone oder jede Pufferzone eine Zusammensetzung auf der Basis mindestens eines Elastomers enthält, die mindestens ein Eisen(III)-Salz enthält, das zur Aktivierung der Oxidation in dieser Zusammensetzung dient, **dadurch gekennzeichnet, dass** das Salz ein Eisen(III)-Salz einer aromatischen Monocarbonsäure ist, die einen oder mehrere gegebenenfalls substituierte aromatische Ringe aufweist und einer der folgenden Formeln entspricht: 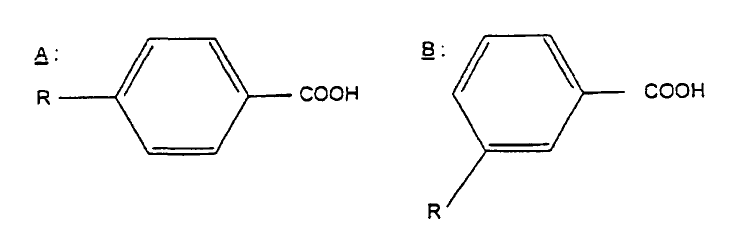 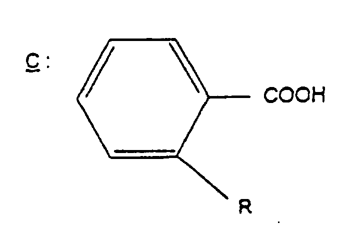 und 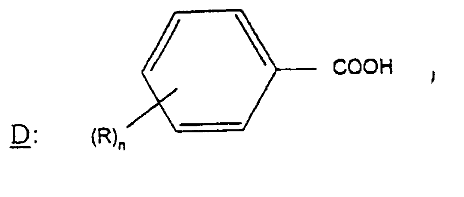 worin bedeuten:
n eine ganze Zahl von 1 bis 5 und
• R in den Formeln A, B und C ein Wasserstoffatom, eine gegebenenfalls substituierte Alkylgruppe mit 1 bis 8 Kohlenstoffatomen, eine Alkoxygruppe oder eine Cyanogruppe und
• R in Formel D eine gegebenenfalls substituierte Arylgruppe mit 1 bis 6 Kohlenstoffatomen.

2. Produkt auf Kautschukbasis nach Anspruch 1, **dadurch gekennzeichnet, dass** die Säure eine Cyanobenzoesäure, wie p-Cyanobenzoesäure, ist.

3. Produkt auf Kautschukbasis nach Anspruch 1, **dadurch gekennzeichnet, dass** die Säure Benzoesäure oder eine Alkylbenzoesäure, wie p-Butylbenzoesäure, ist.

4. Produkt auf Kautschukbasis nach Anspruch 1, **dadurch gekennzeichnet, dass** die Säure eine Toluolcarbonsäure, wie p-Toluolcarbonsäure, m-Toluolcarbonsäure oder o-Toluolcarbonsäure, ist.

5. Produkt auf Kautschukbasis nach Anspruch 1, **dadurch gekennzeichnet, dass** die Säure eine Alkoxybenzoesäure, wie p-Methoxybenzoesäure, ist.

6. Produkt auf Kautschukbasis nach Anspruch 1, **dadurch gekennzeichnet, dass** die Säure eine Naphthoesäure ist.

7. Produkt auf Kautschukbasis nach einem der vorhergehenden Ansprüche, **dadurch gekennzeichnet, dass** die Menge des Eisen(III)-Salzes in der Zusammensetzung 0,01 bis 0,03 pce, bezogen auf das Eisenäquivalent, beträgt.

8. Luftreifenmantel, **dadurch gekennzeichnet, dass** er mit einem Produkt auf Kautschukbasis nach einem der vorhergehenden Ansprüche aufgebaut ist.

9. Luftreifenmantel nach Anspruch 8, der von dem Typ ist, der einen Innengummi, eine Karkassenlage, die sich von Wulstkern zu Wulstkern erstreckt, Scheitellagen, Flanken, die in Wülsten enden, die mindestens einen Wulstkern aufweisen, sowie einen Laufstreifen aufweist, **dadurch gekennzeichnet, dass** die Pufferzone oder jede Pufferzone, welche die genannte Zusammensetzung enthält, mindestens eine der folgenden Positionen einnimmt:
radial unterhalb des Innengummis, zwischen dem Innengummi und der Karkassenlage, zwischen der Karkassenlage und den Scheitellagen, zwischen den Scheitellagen und dem Laufstreifen, zwischen der Karkassenlage und den Flanken, innerhalb oder außerhalb der Flanken, innerhalb oder außerhalb des Laufstreifens.

10. Luftreifenmantel für Lastwagen nach Anspruch 9, **dadurch gekennzeichnet, dass** sich die Pufferzone oder jede Pufferzone, welche die genannte Zusammensetzung enthält, in einer Verstärkungs-Elastomerschicht befindet, die zwischen dem Innengummi und der Karkassenlage vorgesehen ist.

11. Verfahren zur Herstellung eines Produkts auf Kautschukbasis nach einem der Ansprüche 1 bis 7, **dadurch gekennzeichnet, dass** es darin besteht, das Eisen(III)-Salz durch mechanische Bearbeitung in das Elastomer oder die Elastomeren, welche die Zusammensetzung enthält, einzubringen, um die Pufferzone oder jede Pufferzone zu erzeugen.

12. Verfahren zur Herstellung eines Produkts auf Kautschukbasis nach Anspruch 11, wobei das Produkt einen verstärkenden Füllstoff enthält, **dadurch gekennzeichnet, dass** es darin besteht, das Eisen(III)-Salz gleichzeitig mit einem zur Verstärkung der Zusammensetzung vorgesehenen Füllstoff in das Elastomer oder die Elastomeren einzubringen.

13. Verfahren zur Verringerung des Abrollwiderstands eines Luftreifenmantels, **dadurch gekennzeichnet, dass** es darin besteht, ein Eisen(III)-Salz wie in einem der Ansprüche 1 bis 7 definiert durch mechanische Bearbeitung in ein oder mehrere Elastomere einzubringen, aus denen der Luftreifenmantel aufgebaut ist.

## Claims

1. Rubber-based product, of the type comprising at least one buffer zone provided in order to trap oxygen external to the said product so as to protect from oxidation at least one sensitive zone of the said product, the said or each buffer zone containing a composition based on at least one elastomer comprising at least one iron (III) salt provided to activate oxidation in the said composition, **characterised in that** the said salt is an iron (III) salt of an aromatic monocarboxylic acid, the said acid comprising one or more aromatic rings which may or may not be substituted, and having one or other of the following generic formulae: 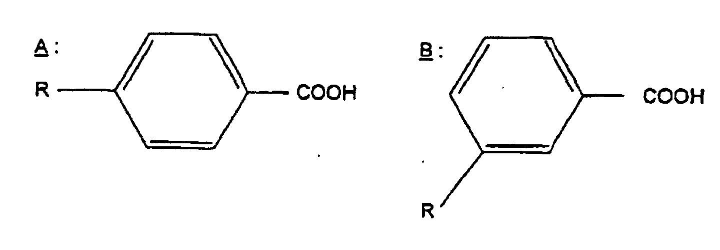 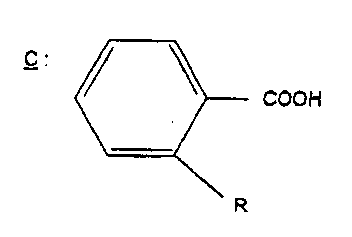 et 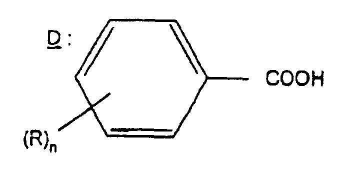 in which n is an integer ranging from 1 to 5, and:
• in formulae A, B and C, R is a hydrogen atom, an alkyl group which may or may not be substituted having from 1 to 8 carbon atoms, an alkoxyl group or a cyano group, and
• in formula D, R is an aryl group which may or may not be substituted having from 6 to 10 carbon atoms.

2. Rubber-based product according to Claim 1, **characterised in that** the said acid is a cyanobenzoic acid, such as p-cyanobenzoic acid.

3. Rubber-based product according to Claim 1, **characterised in that** the said acid is benzoic acid or an alkylbenzoic acid, such as p-butylbenzoic acid.

4. Rubber-based product according to Claim 1, **characterised in that** the said acid is a toluic acid, such as p-toluic, m-toluic or o-toluic acid.

5. Rubber-based product according to Claim 1, **characterised in that** the said acid is an alkoxybenzoic acid, such as p-methoxybenzoic acid.

6. Rubber-based product according to Claim 1, **characterised in that** the said acid is a a naphthoic acid.

7. Rubber-based product according to any of the preceding claims, **characterised in that** the quantity of the said iron (III) salt in the said composition ranges from 0.01 to 0.03 phr of iron equivalent.

8. Tyre cover, **characterised in that** it consists of a rubber-based product according to any of the preceding claims.

9. Tyre cover according to Claim 8, the said tyre cover being of the type which comprises an internal rubber, a carcass ply that extends from one bead wire to the other, crown plies, sidewalls that end in beads comprising at least one bead wire, and a tread,
**characterised in that** the said or each buffer zone containing the said composition occupies at least one of the following positions:
radially to the inside of the said internal rubber, between the said internal rubber and the said carcass ply, between the said carcass ply and the said crown plies, between the said crown plies and the said tread, between the said carcass ply and the said sidewalls, inside or outside the said sidewalls, and/or inside or outside the said tread.

10. Heavy-duty tyre cover according to Claim 9, **characterised in that** the said or each buffer zone containing the said composition is located within a reinforcing elastomer layer provided between the said internal rubber and the said carcass ply.

11. Process for obtaining a rubber-based product according to any of Claims 1 to 7, **characterised in that** it consists of incorporating by mechanical working the said iron (III) salt into the elastomer or elastomers contained in the said composition, to obtain the said or each buffer zone.

12. Process for obtaining a rubber-based product according to Claim 11, the said product comprising a reinforcing filler, **characterised in that** it consists in incorporating the said iron (III) salt into the said elastomer or elastomers at the same time as a filler provided to reinforce the said composition.

13. Process for reducing the rolling resistance of a tyre cover, **characterised in that** it consists in incorporating by mechanical working, into an elastomer or elastomers constituting the said tyre cover, an iron (III) salt as defined in any of Claims 1 to 7.
